# EUROPEAN PATENT SPECIFICATION

(11) **EP 1 635 521 B1**
(45) Date of publication and mention of the grant of the patent: **17.02.2010**
(21) Application number: 05108100.8
(22) Date of filing: 05.09.2005
(51) Int. Cl.: H04L 12/56

(54) **Reducing storage requirement for route information**
Verfahren zur Reduzierung der Anforderungen für Routeninformation
Procédé permettant de réduire les exigences de stockage d'information d'acheminement

(30) Priority: 09.09.2004 US 608302 P; 20.05.2005 US 134034
(43) Date of publication of application: 15.03.2006
(73) Proprietor: MICROSOFT CORPORATION, Redmond, Washington 98052-6399 (US)
(72) Inventor: Eydelman, Vadim, Redmond WA 98052 (US)
(74) Representative: Grünecker, Kinkeldey, Stockmair & Schwanhäusser Anwaltssozietät

(56) References cited:
- EP-A- 1 096 739
- WO-A-03/107621
- US-A1- 2003 074 413
- US-A1- 2003 095 510
- PETERSON NEUSTAR J: "A Privacy Mechanism for the Session Initiation Protocol (SIP)" IETF STANDARD, INTERNET ENGINEERING TASK FORCE, IETF, CH, November 2002 (2002-11), XP015009091 ISSN: 0000-0003

## Description

Applications sometimes need to establish and manage a session between computing devices. A session is a set of interactions between computing devices that occurs over a period of time. As an example, real-time communications applications such as MICROSOFT WINDOWS MESSENGER or Voice over Internet Protocol ("VolP") establish sessions between communicating devices on behalf of a user. These applications may use various mechanisms to establish sessions, such as a "Session Initiation Protocol" ("SIP"). SIP is an application-layer control protocol that devices can use to discover one another and to establish, modify, and terminate sessions between devices. SIP is an Internet proposed standard. Its specification, "RFC 3261," is available at <http://www.ietf.org/rfc/rfc3261.txt>. A specification for extensions to SIP relating to event notifications, "RFC 3265," is available at <http://www.ietf.org/rfc/rfc3265.txt>.

A SIP network comprises entities that can participate in a dialog as a client, server, or both. SIP supports four types of entities: user agent, proxy server, redirect server, and registrar. User agents initiate and terminate dialogs by exchanging messages with other SIP entities. A user agent can be a user agent client ("UAC"), which is a device that initiates SIP requests, or a user agent server ("UAS"), which is a device that receives SIP requests and responds to such requests. As examples, "IP-telephones," personal digital assistants, and any other type of computing device may be user agents. A device can be a UAC in one dialog and a UAS in another, or may change roles during the dialog. A proxy server is a device that acts as a server to clients and a client to servers. In so doing, proxy servers intercept, interpret, or forward messages between UACs and UASs. A redirect server is a device that accepts a SIP request and generates a response directing the UAC that sent the request to contact an alternate network resource. A registrar is a server that accepts registration information from user agents and informs a location service of the received registration information.

SIP supports two message types: requests, which are sent from a UAC to a UAS, and responses, which are sent from a UAS to a UAC, when responding to a request. A SIP message is composed of three parts. The first part of a SIP message is a "request line," which includes fields to indicate a message method (e.g., INVITE) and a Request URI that identifies the user or service to which the request is being directed. The second part of a SIP message comprises headers whose values are represented as name-value pairs. The third part of a SIP message is the message's body, which is used to describe the session to be initiated or contain data that relates to the session. Message bodies may appear in requests or responses.

User agents can communicate by sending SIP messages during a SIP dialog. A SIP dialog is a peer-to-peer relationship between two user agents that persists for some time. A dialog may be established when a UAC sends an INVITE request to a UAS and the UAS replies with a 200 OK response. A dialog is uniquely identified by a dialog identifier that includes a call identifier, a local tag, and a remote tag. User agents maintain state information for their dialogs that is needed when sending future requests of the dialog. The state information includes the dialog identifier, a local URI, a remote URI, and a route set. The route set is the list of proxy servers that need to be traversed when a request is sent to the other user agent of the dialog. When a UAS receives the INVITE request and a UAC receives an INVITE response, they each initialize their state information for the dialog.

An INVITE request may contain To, From, Call-ID, Via, Contact, and Record-Route headers. The To header identifies the logical identity of the recipient of the request. The From header identifies the logical identity of the initiator of the request. The Call-lD header uniquely identifies a group of messages and is the same for all messages in a dialog. A dialog is uniquely identified by a dialog identifier that includes the Call-ID value from the Gail-iD header and a local tag and a remote tag from the From header and To header. The Via headers indicate the path taken by the request so far (e.g., a sequence of network addresses ("URIs") of devices through which the request has transited) and the path that the corresponding response is to take. The UAC that initiates a request and each proxy server that receives a request adds a Via header containing its URI. Each proxy server that receives a response forwards the response to the device indicated by the next Via header. A Contact header contains the URI of the sender of the message to which subsequent requests of the dialog can be directly sent unless a proxy server indicates that it wants to receive subsequent messages of the dialog. The Record-Route headers of a request specify the URIs of devices (proxy servers) through which subsequent requests of the dialog are to be routed. The UAC that sends the INVITE request may add a Contact header identifying its URI. When a proxy server wants to be in the path of a dialog, it inserts a Record-Route header with its URI into the INVITE request before when forwarding the request.

When a UAS receives an INVITE request, it stores the state information for the dialog. The UAS sets the remote URI to the URI of the Contact header and sets the route set to the Record-Route headers of the request if any. Otherwise, it sets the record set to null.

When the UAS sends a response to the INVITE request, it copies the route set to the response, adds its own Contact header to the response, copies the Via headers to the response, and so on. It then forwards the response to the device identified by the last Via header. Each proxy server that receives the response forwards it to the devices identified by the next Via header.

When the UAC receives the response, it stores the Record-Route headers in reverse order if any as its route set for the dialog and sets the remote URI to the URI of the Contact header.

When either user agent sends a subsequent request of the dialog, it adds Route headers to the request corresponding to the stored route set for the dialog and stores the remote URI into the Request URI. The user agent then sends the request to the device identified by the first Route header if any, otherwise to the device identified by the Request URI. Each proxy server removes the top Route header and forwards the request to the device identified by the next Route header if any, otherwise to the device identified by the Request URI.

A common form of real-time conversation is provided by instant messaging services. An instant messaging service allows participants at endpoints to send messages and have them received within a second or two by the other participants in the conversation. The receiving participants can then send responsive messages to the other participants in a similar manner. To be effective, a real-time conversation relies on the participants' becoming aware of, reviewing, and responding to received messages very quickly. This quick response is in contrast to conventional electronic mail systems in which the recipients of electronic mail messages respond to messages at their convenience.

When an initiating participant wants to start a real-time conversation, that participant needs to know whether the intended participants are available to respond in real time to a message. If not, then communications via conventional electronic mail, voice mail, or some other mechanism may be more appropriate. For example, if the computers of the intended participants are currently powered off, then a real-time conversation may not be possible. Moreover, if their computers are currently powered on, but the intended participants are away from their computers, a real-time conversation is also not possible. The initiating participant would like to know the availability of the intended participants so that an appropriate decision on the form of communication can be made.

The availability status of an entity such as a computer system (i.e., endpoint) or a user associated with that computer system is referred to as "presence information." Presence information identifies the current "presence state" of the user. Users make their presence information available so that other users can decide how best to communicate with them. For example, the presence information may indicate whether a user is logged on ("online") with an instant messaging server or is logged off ("offline"). Presence information may also provide more detailed information about the availability of the user. For example, even though a user is online, that user may be away from their computer in a meeting. In such a case, the presence state may indicate "online" and "in a meeting."

In an instant messaging context, a publishing user ("publisher") may provide their presence information to a presence server that then provides the presence information to subscribing users ("subscribers"). Thus, a presence server may use a subscriber/publisher model to provide the presence information for the users of the presence service. Whenever the presence information of a user changes, the presence server is notified of the change by that user's computer system and in turn notifies the subscribing users of the change. A subscribing user can then decide whether to initiate an instant messaging conversation based on the presence information of the intended participants. For example, if the presence information indicates that a publishing user is currently in a conference telephone call, then the subscribing user may decide to send an instant message, rather than place a telephone call, to the publishing user. If the subscribing user, however, needs to call and speak with the publishing user, the subscribing user needs to monitor the presence information of the publishing user to know when the call can be placed. When the subscribing user notices that the publishing user's presence information indicates that the telephone conference has been concluded, the subscribing user can then place the telephone call.

When a presence server uses the SIP protocol, it needs to maintain route information for the subscribers so that it can route request messages of a SIP dialog along the same path as the subscribe request message, but in the reverse direction. As a result, a presence server may store for each publisher the route information for each subscriber of that publisher's presence information. Since a presence server can support thousands of publishers and subscribers, the presence server may be required to store a vast amount of route information. It would be desirable to have a technique that would lower the storage requirements of a presence server without requiring modifying a presence server and that would be interoperable with the existing SIP servers, such as proxy servers and registrars.

US 2003/074413 A1 discloses provision of a routing protocol that allows application-layer programs to specify a message path including one or more intermediaries at which the message may be substantively processed. After an intermediary processes the message, the intermediary forwards the message to either the next intermediary (when present) or the message recipient. A reverse message path may be dynamically created during the message's forward traversal of the message path. Related messages or forwarded messages may then be returned to the initial sender using the dynamically created reverse message path. The reverse path can be used to indicate a possible message path for a message to be sent to the initial sender for which the reverse path was built. That is, the reverse message path becomes a possible forward path that allows a recipient of a message to send another message back to the initial sender without having to create a channel or virtual connection between them, and also allows the recipient to indicate that the message being sent back to the initial sender corresponds to the original "forward" message.

EP 096 739 A1 discloses a method of establishing a bi-directional communication session between a first endpoint and a second endpoint in a communications network comprising the steps of: (i) sending a communication from said second endpoint to said first endpoint to determine the path between said second and said first endpoints; (ii) sending a first message along said path in order to set up a first label mapping along said path for use over said path in a forward direction; and (iii) sending a second message along said path in order to set up a second label mapping along said path for use over said path in a reverse direction. In a described embodiment, the multi-protocol label switching (MPLS) standard messaging protocol is used in conjunction with the constrained-based routing label distribution protocol (CR-LDP) messaging protocol to help manage the communications network comprising the endpoints, the abstract node, the clouds of nodes and the links between these. In an example, once the connection has been established, messages are transmitted over that connection using a protocol that involves labels. Using a label, an abstract node is able to determine which next neighbor abstract node to forward the packet or message to. When a message or packet is received by an abstract node, it identifies the received packet's label in the mapping and determines which label the packet should now be given and hence where the packet should be forwarded next.

WO 03/107621 A discloses a method and a communication system, this system comprising a first entity maintaining registration information from a plurality of users and a second entity maintaining information associated with said plurality of users, wherein said second entity information is dependent on the registration information. The disclosed method comprises sending a subscribe message for an event from the second entity to the first entity, wherein the event is a change in the registration information of at least one of the plurality of users at the first entity; receiving at the first entity a register message from at least one user, said message changing the registration information of said at least one user; sending a notification from the first entity to the second entity in response to the register message, wherein the notification includes information associated with said at least one user. Preferably, the first entity is a registrar and the second entity is a presence server. The change in registration information may relate to presence information. In particular, the system may operate in accordance with a session initiation protocol (SIP).

US 2003/095510 A1 discloses a communication system providing for establishing communications amongst a group according to a call initiation protocol within the system.

Peterson Neustar J: "A Privacy Mechanism for the Session Initiation Protocol (SIP)" IEFT Standard, Internet Engineering Task Force, IETF; CH November 2002 describes a privacy mechanism for the session initiation protocol (SIP).

It is the object of the present invention to propose a technique that lowers the storage requirements of a presence server without requiring to modify a presence server and that is interoperable with the existing SIP servers such as proxy servers and registrars.

This object is solved by the subject matter of the independent claims.

Preferred embodiments are defined in the dependent claims.

A method and system in a proxy node of a communication network for proxying messages that are being routed between source and destination endpoints during a dialog. The communication system receives a request message sent from a source endpoint to a destination endpoint. The request message includes route information that identifies a path of nodes through which a request message from the destination endpoint to the source endpoint is to travel after arriving at the proxy node. Upon receiving a request message, the proxy node may generate a mapping of the dialog to the route information. The proxy node then forwards the request message with only its route information to the destination endpoint, removing the stored route information. When the destination endpoint receives the request message, the message only includes route information for the proxy node that stored the route information and any intermediary proxy nodes between that proxy node and the destination endpoint. Thus, the destination endpoint only needs to store the route information relating to that proxy node and the intermediary proxy nodes if any, rather than for all the proxy nodes. When the proxy node receives a request message of the dialog sent from the destination endpoint to the source endpoint, it can add the stored route information to the request message so that the request message can travel along the same route as the original request message to the source endpoint.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Figure 1 is a block diagram that illustrates an environment in which the communication system stores path information in one embodiment.

Figure 2 is a flow diagram that illustrates the processing of a component of a proxy server that receives a source request from a source in one embodiment.

Figure 3 is a flow diagram that illustrates the processing of a component of a proxy server that receives a destination request from a destination in one embodiment.

Figure 4 is a block diagram that illustrates various environments in which the communication system can use route information stored by other services.

Figure 5 is a flow diagram that illustrates the processing of a component of a presence server that receives a request in one embodiment.

Figure 6 is a flow diagram that illustrates the processing of a component of a presence server that sends a request in one embodiment.

Figure 7 is a flow diagram that illustrates the processing of a component of the communication system that receives a source request at an access point in one embodiment.

Figure 8 is a flow diagram that illustrates the processing of a component of the communication system that receives a destination request at an access point in one embodiment.

A method and system in a proxy node of a communication network for proxying messages that are being routed between source and destination endpoints during a dialog. In one embodiment, the communication system receives a request message sent from a source endpoint to a destination endpoint. The request message includes route information that identifies a path of nodes through which a request message of the dialog sent from the destination endpoint to the source endpoint is to travel after arriving at the proxy node. For example, if the communication system uses the Session Initiation Protocol ("SIP"), then the proxy node may implement a proxy server and the source and destination endpoints may implement user agents. Upon receiving a request message, the proxy node may generate a mapping of the dialog to the route information. When SIP is used, the route information includes the information of the Record-Route header. The proxy node then forwards the request message with only its route information to the destination endpoint possibly via intermediary proxy nodes. When the destination endpoint receives the request message, the message only includes route information for that proxy node and intermediary proxy nodes between that proxy node and the destination endpoint. When the proxy node receives a request message of the dialog sent from the destination endpoint to the source endpoint, it can add the stored route information to the request message so that the request message can travel along the same route as the original request message to the source endpoint. For example, when SIP is used, the proxy node adds a Route header for each Record-Route header of the original request message. Thus, the destination endpoint only needs to store the route information relating to that proxy node and intermediary proxy nodes if any. If the destination endpoint is a presence server, then the storage requirements for the route information of the presence server can be reduced. Moreover, since the SIP message that is modified by the proxy node complies with SIP, the proxy node is compatible with nodes that comply with SIP.

In one embodiment, the communication system is implemented on a proxy node that includes a registration service. For example, the proxy node may include a SIP proxy server and a SIP registrar. A SIP registrar maintains a mapping of users to endpoints that includes route information for the path between the proxy node and the endpoint. The SIP registrar maintains the route information so that it can include the route information in request messages sent to the endpoints. When the SIP proxy server is co-located with the SIP registrar, the SIP proxy can take advantage of the route information maintained by the SIP registrar. In particular, when the SIP proxy server receives a request message, it can check the information of the SIP registrar to determine whether the information for the source endpoint is stored. If so, the SIP proxy server does not need to store the route information for that source endpoint. When a request message destined for the source endpoint is received by the SIP proxy server, it retrieves the route information for the source endpoint from the information of the SIP registrar. The SIP proxy server then adds the route information to the request message and then forwards the message. In this way, the communication system can avoid storing redundant route information.

In one embodiment, a proxy node that includes a registration server is the last proxy node in the path from the endpoint of the user to a presence server. This characteristic of the path is possible in a communication network in which a registration server can determine the location of the presence servers. The aspects of the path storage system implemented on the presence server can take advantage of this characteristic when the registration server and the presence server are within the same domain. In such a case, the presence server can detect that the registration server is within the same domain and not store the route information. When the presence server sends a request message, it can access the registration database to find the path from the registration server to the endpoint. The presence server can add the route information derived from the path to the message. In such a case, the presence server can avoid storing route information of a message and instead rely upon the registration database.

In one embodiment, an access point for a domain maintains a mapping of other domains to their access points. The mapping is used by the access point to route messages to endpoints in other domains. When the access point node includes a proxy server, the proxy server can take advantage of the access point mapping to reduce the route information that needs to be stored. When the proxy server receives a message from an endpoint in another domain, it need not store the route information for the access point of the other domain. When the proxy server receives a request message that is to be sent to another domain, it can use the domain of the source endpoint to retrieve information to generate a portion of the route information. In this way, when a proxy server is installed on the same node as an access point, the proxy server can avoid storing redundant portions of the route records that are already stored by the access point.

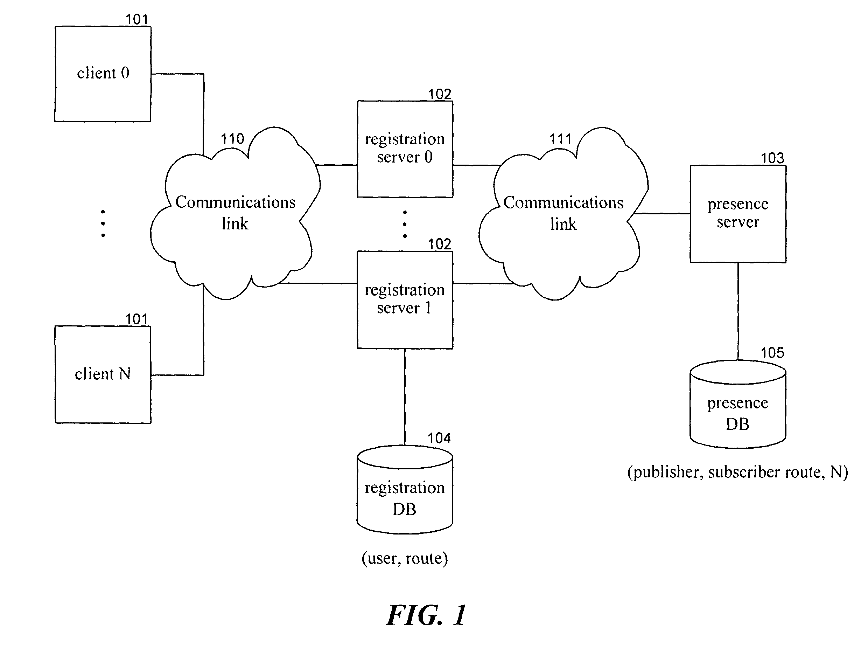

Figure 1 is a block diagram that illustrates an environment in which the communication system stores path information in one embodiment. The environment includes client endpoints 101 connected via communications link 110 to registration servers 102, which are connected via communications link 111 to a presence server 103. Each registration server includes a registration database 104 that maps users to the route by which requests are to be sent from the registration server to the client endpoints associated with the user. When a registration server receives a registration request from a client endpoint, it stores the route information of the request in the registration database. The presence server maintains a presence database 105 that maps the publishers of presence information to its subscribers. The mapping includes the route information of each subscriber. When the presence information of a publisher changes, the presence server sends a request to each subscriber of that publisher. Each request includes the route information of the subscriber. When the communication system is implemented on a proxy server that is co-located with a registration server, the proxy server can remove the route information from the subscribe requests that it receives from the client endpoints. The proxy server then adds its route information to the subscribe request and forwards the request to the presence server. When the presence server receives the request, it stores the route information of the subscribe request as normal. However, the route information of the subscribe request includes only the route information from the registration server to the presence server. When the presence server sends a request to a client endpoint (e.g., indicating a change in the presence information of a publisher), the proxy server upon receiving the request retrieves the route information for the user from the registration database and stores the route information in the request. The proxy server then forwards the request with the route information to the client endpoint.

The computing device on which the communication system is implemented may include a central processing unit, memory, input devices (e.g., keyboard and pointing devices), output devices (e.g., display devices), and storage devices (e.g., disk drives). The memory and storage devices are computer-readable media that may contain instructions that implement the communication system. In addition, the data structures and message structures may be stored or transmitted via a data transmission medium, such as a signal on a communications link. Various communication links may be used, such as the Internet, a local area network, a wide area network, a point-to-point dial-up connection, a cell phone network, and so on.

Embodiments of the communication system may be implemented in various operating environments that include personal computers, server computers, hand-held or laptop devices, multiprocessor systems, microprocessor-based systems, programmable consumer electronics, digital cameras, network PCs, minicomputers, mainframe computers, distributed computing environments that include any of the above systems or devices, and so on. The computer systems may be cell phones, personal digital assistants, smart phones, personal computers, programmable consumer electronics, digital cameras, and so on.

The communication system may be described in the general context of computer-executable instructions, such as program modules, executed by one or more computers or other devices. Generally, program modules include routines, programs, objects, components, data structures, and so on that perform particular tasks or implement particular abstract data types. Typically, the functionality of the program modules may be combined or distributed as desired in various embodiments.

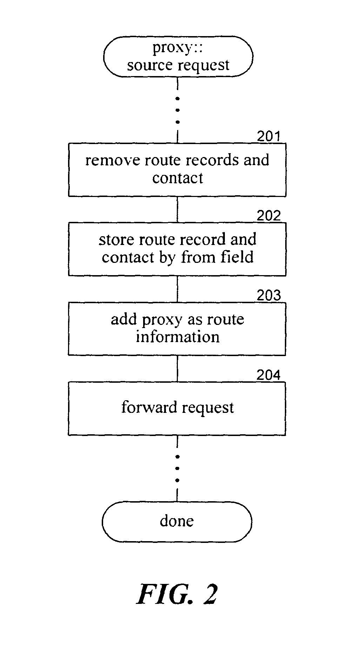

Figure 2 is a flow diagram that illustrates the processing of a component of a proxy server that receives a source request from a source in one embodiment. In this embodiment, since the proxy server does not have access to a database of route information generated by another service (e.g., a SIP registrar), it creates its own database from the route information of the requests. In block 201, the component removes the route records from the request. In block 202, the component stores the route records indexed by the dialog identifier of the request. In block 203, the component adds the route information of the proxy server to the request (e.g., a Contact header). In block 204, the component forwards the request and then completes.

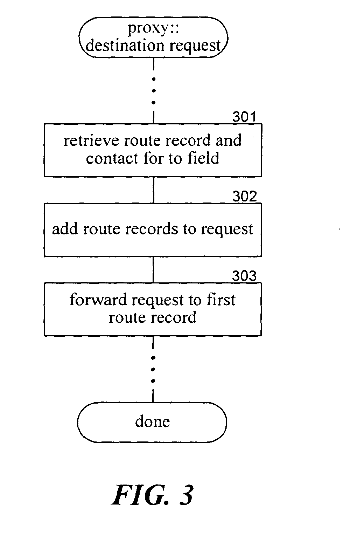

Figure 3 is a flow diagram that illustrates the processing of a component of a proxy server that receives a destination request from a destination in one embodiment. In this embodiment, the proxy server does not have access to a database of route information generated by another service. In block 301, the component retrieves the route records for the dialog identifier of the request. In block 302, the component adds the route records to the request. In block 303, the component forwards the request to the node indicated by the first route record of the route information and then completes.

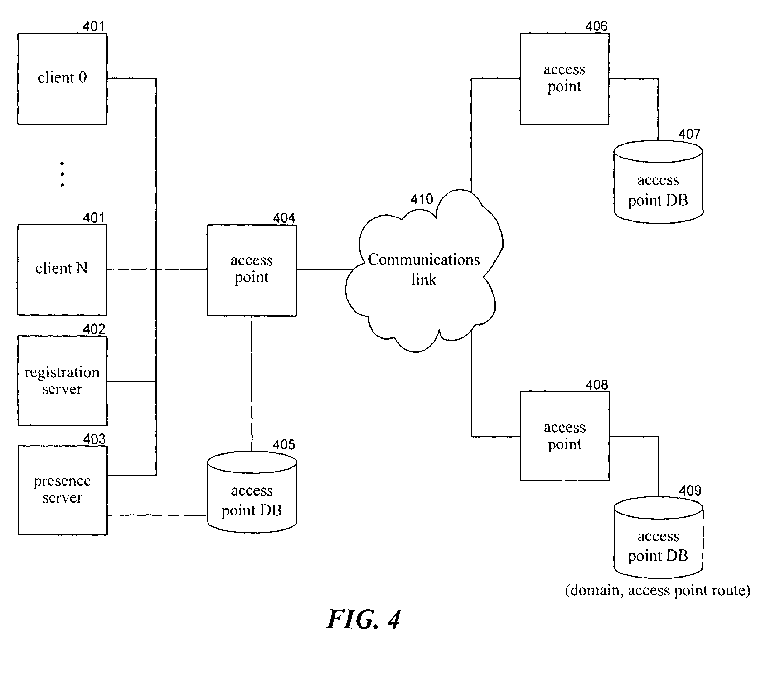

Figure 4 is a block diagram that illustrates various environments in which the communication system can use route information stored by other services. Client endpoints 401, a registration server 402, and a presence server 403 are connected via access point 404 to a communications link. The access point 404 may maintain a database that maps domains to routes to the access points 406 and 408 through which the users of the domains are accessible via communications link 410. For example, access point 404 may maintain access point database 405 that maps one domain to the route to access point 406 and another domain to the route to access point 408. An access point may also maintain a mapping of users of the domain to their registration servers. The access points 406 and 408 may maintain a similar mapping 407 and 409 of domains to routes. The communication system may use the information of the access point database that is within the same domain to avoid having to store route information for SIP requests that are received from client endpoints in other domains. In addition, when a presence server (or some other SIP node) is located in the same domain as a registration server, the presence server can avoid having to store route information that is already stored by the registration server.

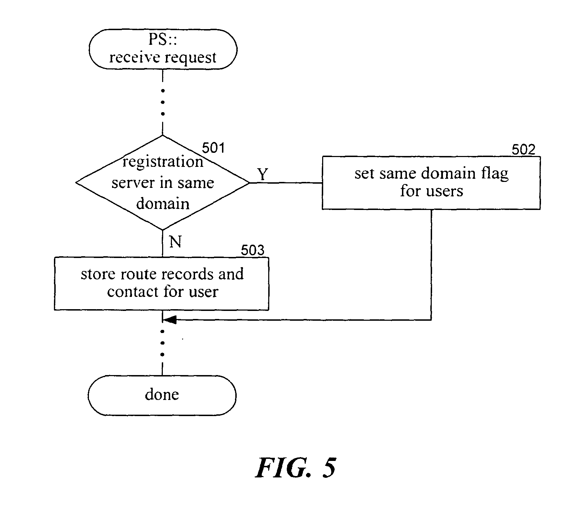

Figure 5 is a flow diagram that illustrates the processing of a component of a presence server that receives a request in one embodiment. In this embodiment, the presence server determines whether the registration server is in the same domain and, if so, avoids storing the route information associated with the received request. In decision block 501, if the registration server is in the same domain, then the component continues at block 502, else the component continues at block 503. In block 502, the component sets a flag indicating that the registration server is in the same domain and does not store the route information of the request. In block 503, the component stores the route records and contact of the request. The component then completes.

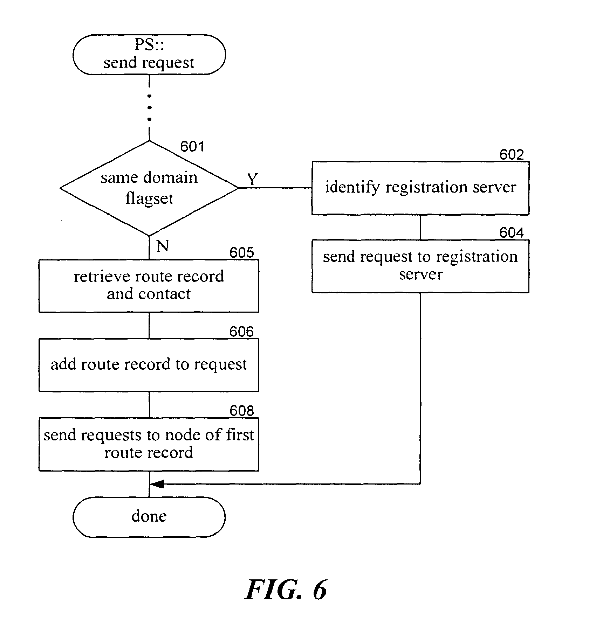

Figure 6 is a flow diagram that illustrates the processing of a component of a presence server that sends a request in one embodiment. In this embodiment, the presence server determines whether the registration server is in the same domain and, if so, requests the route information from the registration server. In decision block 601, if the registration server of the user is in the same domain, then the component continues at block 602, else the component continues at block 605. In block 602, the component identifies the registration server of the user, for example, from an active directory. In block 604, the component forwards the request to the registration server, which may have a co-located proxy server. The component then completes. In block 605, the component retrieves the route records and contact information for the client endpoint. In block 606, the component adds the route records to the request. In block 608, the component sends the request to the first node identified by the retrieved route records and then completes.

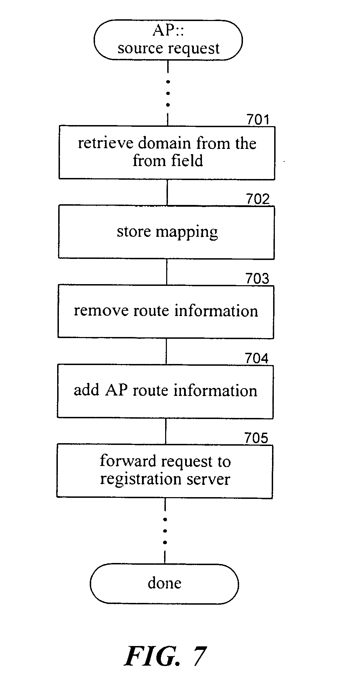

Figure 7 is a flow diagram that illustrates the processing of a component of the communication system that receives a source request at an access point in one embodiment. In this embodiment, the component is part of a proxy server that is co-located with an access point. In block 701, the component retrieves the domain from the to field. In block 702, the component ensures that there is a mapping of the retrieved domain to route information for use when sending a request to that domain. In block 703, the component removes the route information from the request. In block 704, the component adds the access point as route information to the request. In block 705, the component forwards the request to a registration server. The component then completes.

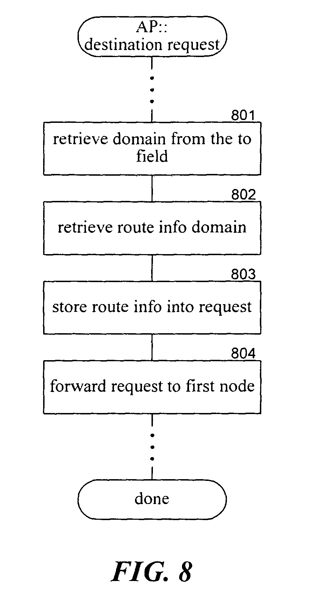

Figure 8 is a flow diagram that illustrates the processing of a component of the communication system that receives a destination request at an access point in one embodiment. In block 801, the component retrieves the domain from the to field. In block 802, the component retrieves the route information for the domain. In block 803, the component adds to the request the route information of the access point. In block 804, the component forwards the request to the first node identified by the rate information and then completes.

From the foregoing, it will be appreciated that specific embodiments of the communication system have been described herein for purposes of illustration, but that various modifications may be made without deviating from the scope of the invention. Accordingly, the invention is not limited except as by the appended claims.

## Claims

1. A method in a proxy node of a network for processing messages of a dialog, the method comprising:
receiving a first request of the dialog sent from a source node to a destination node, the first request including route information that identifies a path of nodes through which a request from the destination node to the source node is to travel after arriving at the proxy node;
providing a mapping of the dialog to the route information;
forwarding (204) the first request with only the route information of the proxy node to the destination node;
receiving a second request of the dialog sent to the source node;
retrieving (301) the route information for the dialog indicated in the second request from the mapping;
adding (302) the retrieved route information to the second request; and
forwarding the second request to the node indicated by the retrieved route information.

2. The method of claim 1 wherein the providing of the mapping occurs after the request is received at the proxy node.

3. The method of claim 1 wherein source nodes from the same domain have the same route information and wherein the mapping maps the domain of the source nodes to the route information.

4. The method of claim 3 wherein the proxy node is an access point node (404, 406, 408) of a domain.

5. The method of claim 1 wherein the messages comply with the Session Initiation Protocol and the route information is derived from Record-Route and Contact headers.

6. The method of claim 5 wherein the forwarding (303) of the second request includes sending the request to a first node identified by the route information.

7. The method of claim 1 wherein the route information identifies the path of nodes that the request traveled from the source node to the proxy node.

8. The method of claim 1 wherein the requests comply with the Session Initiation Protocol, the proxy node is a registration server (102), and the provided mapping is a registration mapping.

9. The method of claim 8 wherein the destination node is a presence server.

10. A computer-readable medium containing instructions for controlling a proxy node of a network to process messages using a Session Initiation Protocol, by a method comprising:
receiving a first request of a dialog from a source node to a destination node, the first request including route information that identifies a path of nodes through which a request from the destination node to the source node is to travel after arriving at the proxy node;
generating a mapping (202) of the dialog to the route information;
forwarding (204) the first request with only the route information of the proxy node to the destination node;
receiving a second request of the dialog sent to the source node;
retrieving (301) the route information for the dialog indicated in the second request from the mapping;
adding (302) the retrieved route information to the second request; and
forwarding (303) the second request to the node indicated by the retrieved route information.

11. The computer-readable medium of claim 10 wherein the generating of the mapping occurs after the request is received at the proxy node.

12. The computer-readable medium of claim 10 wherein source nodes from the same domain have the same route information and wherein the mapping maps the domain of the source nodes to the route information.

13. The computer-readable medium of claim 10 wherein the proxy node is a registration server (102) and the generated mapping is a registration mapping.

14. The computer-readable medium of claim 13 wherein the mapping is generated when the source node registers with the proxy node.

15. The computer-readable medium of claim 14 wherein the destination node is a presence server.

## Patentansprüche

1. Verfahren zum Verarbeiten von Nachrichten eines Dialogs in einem Proxy-Knoten eines Netzwerks, wobei das Verfahren umfasst:
Empfangen einer ersten Anforderung des Dialogs, die von einem Quellknoten an einen Zielknoten gesendet wird, wobei die erste Anforderung Routeninformation beinhaltet, die einen Weg von Knoten identifiziert, über die eine Anforderung von dem Zielknoten zu dem Quellknoten nach Ankunft an dem Proxy-Knoten gelangen soll;
Bereitstellen einer Abbildung des Dialogs auf die Routeninformation;
Weiterleiten (204) der ersten Anforderung lediglich mit der Routeninformation des Proxy-Knotens an den Zielknoten;
Empfangen einer zweiten Anforderung des Dialogs, die an den Quellknoten gesendet wird;
Abrufen (301) der Routeninformation für den Dialog, der in der zweiten Anforderung angezeigt wird, aus der Abbildung;
Hinzufügen (302) der abgerufenen Routeninformation zu der zweiten Anforderung; und
Weiterleiten der zweiten Anforderung an den Knoten, der von der abgerufenen Routeninformation angezeigt wird.

2. Verfahren nach Anspruch 1, wobei das Bereitstellen der Abbildung nach Empfang der Anforderung an dem Proxy-Knoten erfolgt.

3. Verfahren nach Anspruch 1, wobei Quellknoten aus derselben Domäne dieselbe Routeninformation aufweisen und wobei die Abbildung die Domäne der Quellknoten auf die Routeninformation abbildet.

4. Verfahren nach Anspruch 3, wobei der Proxy-Knoten ein Zugangspunktknoten (404, 406, 408) einer Domäne ist.

5. Verfahren nach Anspruch 1, wobei die Nachrichten dem Sitzungsinitiierungsprotokoll (Session Initiation Protocol) entsprechen und die Routeninformation aus Routenaufzeichnungs- und Kontakteinleitungsbereichen (Record-Route and Contact Headers) bezogen ist.

6. Verfahren nach Anspruch 5, wobei das Weiterleiten (303) der zweiten Anforderung ein Senden der Anforderung an einen ersten Knoten, der von der Routeninformation identifiziert wird, beinhaltet.

7. Verfahren nach Anspruch 1, wobei die Routeninformation den Weg von Knoten identifiziert, über die die Anforderung von dem Quellknoten zu dem Proxy-Knoten gelangt ist.

8. Verfahren nach Anspruch 1, wobei die Anforderungen dem Sitzungsinitiierungsprotokoll (Session Initiation Protocol) entsprechen, der Proxy-Knoten ein Registrierungsserver (Registration Server) (102) ist und die bereitgestellte Abbildung eine Registrierungsabbildung ist.

9. Verfahren nach Anspruch 8, wobei der Zielknoten ein Präsenz-Server (Presence Server) ist.

10. Computerlesbares Medium mit Anweisungen zum Steuern eines Proxy-Knotens eines Netzwerkes zur Verarbeitung von Nachrichten unter Verwendung eines Sitzungsinitiierungsprotokolls (Session Initiation Protocol) mittels eines Verfahrens, das umfasst:
Empfangen einer ersten Anforderung eines Dialogs von einem Quellknoten zu einem Zielknoten, wobei die erste Anforderung Routeninformation beinhaltet, die einen Weg von Knoten identifiziert, über die eine Anforderung von dem Zielknoten zu dem Quellknoten nach Ankunft an dem Proxy-Knoten gelangen soll;
Erzeugen einer Abbildung (202) des Dialogs auf die Routeninformation;
Weiterleiten (204) der ersten Anforderung lediglich mit der Routeninformation des Proxy-Knotens an den Zielknoten;
Empfangen einer zweiten Anforderung des Dialogs, die an dem Quellknoten gesendet wird;
Abrufen (301) der Routeninformation für den Dialog, der in der zweiten Anforderung angezeigt wird, aus der Abbildung;
Hinzufügen (302) der abgerufenen Routeninformation zu der zweiten Anforderung; und
Weiterleiten (303) der zweiten Anforderung an den Knoten, der von der abgerufenen Routeninformation angezeigt wird.

11. Computerlesbares Medium nach Anspruch 10, wobei das Erzeugen der Abbildung nach Empfang der Anforderung an dem Proxy-Knoten erfolgt.

12. Computerlesbares Medium nach Anspruch 10, wobei Quellknoten aus derselben Domäne dieselbe Routeninformation aufweisen und wobei die Abbildung die Domäne der Quellknoten auf die Routeninformation abbildet.

13. Computerlesbares Medium nach Anspruch 10, wobei der Proxy-Knoten ein Registrierungsserver (Registration Server) (102) ist und die erzeugte Abbildung eine Registrierungsabbildung ist.

14. Computerlesbares Medium nach Anspruch 13, wobei die Abbildung erzeugt wird, wenn sich der Quellknoten bei dem Proxy-Knoten registriert.

15. Computerlesbares Medium nach Anspruch 14, wobei der Zielknoten ein Präsenz-Server (Presence Server) ist.

## Revendications

1. Procédé dans un noeud proxy d'un réseau pour traiter des messages d'un dialogue, ce procédé comprenant :
la réception d'une première demande de dialogue envoyée à partir d'un noeud source au noeud de destination, la première demande contenant des informations d'acheminement qui identifient une trajectoire de noeuds par lesquels une demande provenant du noeud de destination et adressée au noeud source doit passer après être arrivée au noeud proxy ;
la fourniture d'un mappage du dialogue par rapport aux informations d'acheminement ;
le transfert (204) de la première demande avec seulement les informations d'acheminement du noeud proxy vers le noeud de destination ;
la réception d'une seconde demande de dialogue envoyée au noeud source ;
l'extraction (301) des informations d'acheminement pour le dialogue indiqué dans la seconde demande, à partir du mappage ;
l'adjonction (302) des informations d'acheminement extraites à la seconde demande ; et
le transfert de la seconde demande au noeud indiqué par les informations d'acheminement extraites.

2. Procédé de la revendication 1, selon lequel la fourniture du mappage se fait après que la demande a été reçue au niveau du noeud proxy.

3. Procédé de la revendication 1, selon lequel les noeuds sources provenant du même domaine ont les mêmes informations d'acheminement et le mappage mappe le domaine des noeuds sources par rapport aux informations d'acheminement.

4. Procédé de la revendication 3, selon lequel le noeud proxy est un noeud de points d'accès (404, 406, 408) d'un domaine.

5. Procédé de la revendication 1, selon lequel les messages sont conformes au protocole SIP (Session Initiation Protocol) et les informations d'acheminement sont dérivées d'en-têtes Enregistrement-Trajectoire et Contact.

6. Procédé de la revendication 5, selon lequel le transfert (303) de la seconde demande contient l'envoi de la demande à un premier noeud identifié par les informations d'acheminement.

7. Procédé de la revendication 1, selon lequel les informations d'acheminement identifient la trajectoire de noeuds que la demande a parcourue du noeud source jusqu'au noeud proxy.

8. Procédé de la revendication 1, selon lequel les demandes sont conformes au protocole SIP, le noeud proxy est un serveur d'enregistrement (102) et le mappage fourni est un mappage d'enregistrement.

9. Procédé de la revendication 8, selon lequel le noeud de destination est un serveur de présence.

10. Support lisible par ordinateur, contenant des instructions pour commander un noeud proxy d'un réseau pour traiter des messages en utilisant un protocole SIP, à l'aide d'un procédé comprenant :
la réception d'une première demande de dialogue à partir d'un noeud source au noeud de destination, la première demande contenant des informations d'acheminement qui identifient une trajectoire de noeuds par lesquels une demande provenant du noeud de destination et adressée au noeud source doit passer après être arrivée au noeud proxy ;
la production d'un mappage (202) du dialogue par rapport aux informations d'acheminement ;
le transfert (204) de la première demande avec seulement les informations d'acheminement du noeud proxy vers le noeud de destination ;
la réception d'une seconde demande de dialogue envoyée au noeud source ;
l'extraction (301) des informations d'acheminement pour le dialogue indiqué dans la seconde demande à partir du mappage ;
l'adjonction (302) des informations d'acheminement extraites à la seconde demande ; et
le transfert (303) de la seconde demande au noeud indiqué par les informations d'acheminement extraites.

11. Support lisible par ordinateur de la revendication 10, dans lequel la production du mappage se fait après que la demande a été reçue au niveau du noeud proxy.

12. Support lisible par ordinateur de la revendication 10, dans lequel les noeuds sources provenant du même domaine ont les mêmes informations d'acheminement et le mappage mappe le domaine des noeuds sources par rapport aux informations d'acheminement.

13. Support lisible par ordinateur de la revendication 10, dans lequel le noeud proxy est un serveur d'enregistrement (102) et le mappage produit est un mappage d'enregistrement.

14. Support lisible par ordinateur de la revendication 13, dans lequel le mappage est produit quand le noeud source s'enregistre auprès du noeud proxy.

15. Support lisible par ordinateur de la revendication 14, dans lequel le noeud de destination est un serveur de présence.
